# EUROPÄISCHE PATENTSCHRIFT

(11) **EP 1 120 696 B1**
(45) Veröffentlichungstag und Bekanntmachung des Hinweises auf die Patenterteilung: **07.05.2008**
(21) Anmeldenummer: 01101524.5
(22) Anmeldetag: 24.01.2001
(51) Int. Cl.: G05B 19/418

(54) **Verfahren zur Datenübertragung von und zu CNC gesteuerten Maschinensteuerungen**
Method for data transmission from and to CNC-controlled-machines controls
Méthode de transmission de données de et vers des commandes de machines à commande CNC

(30) Priorität: 25.01.2000 AT 992000
(43) Veröffentlichungstag der Anmeldung: 01.08.2001
(73) Patentinhaber: Wieland, Martin, 6372 Oberndorf (AT)
(72) Erfinder: Wieland, Martin, 6372 Oberndorf (AT)

(56) Entgegenhaltungen:
- EP-A1- 0 827 054
- EP-A1- 0 917 034
- WO-A1-95/25311
- DE-A1- 4 413 836
- US-A- 5 850 343
- WIESEMANN & THEIS GMBH: "Per COM-Umlenkung netzwerkfähig" COMPUTER & AUTOMATION, Nr. 1, 1999, Seite 88,
- WIESEMANN & THEIS: "Kataloge 1994, 1995, 1997 - Auszüge"

## Beschreibung

Die Erfindung betrifft ein Verfahren zur Datübertragung von und zu CNC gesteuerten Maschinensteuerungen mit serieller Schnittstelle unter Verwendung einer Einrichtung bestehend aus einer oder mehreren CNC-Steuerungen mit serieller Schnittstelle, einer seriellen Verbindungsleitung zu einem oder mehreren Umsetzern von RS 232 auf ein Standardnetzwerk mit TCP/IP Protokoll - insbesondere Terminalserver oder Computer mit Netzerkanschluß - einem Standardnetzwerk mit TCP/IP Protokoll und einem mit diesem Netzwerk verbundenen Leitrechner.

Der Erfindung bezieht sich somit allgemein darauf, CNC Steuerungen von Werkzeugmaschinen über deren serielle Schnittstelle und ein Standardnetzwerk mit TCP/IP Protokoll mit einem Leitrechner zu verbinden.

### Technischer Hintergrund

An Werkzeugmaschinen verwendet man heutzutage im allgemeinen numerische Steuerungen (NC = "numerical control"), und zwar meist rechnergeführte numerische Steuerungen (CNC = computerized numerical control"). Diese Steuerungen haben zur Aufgabe, anhand von Befehlen und Daten, die über eine Tastatur, einen Datenträger (z.B. Lochstreifenleser, Diskette wie in JP3278105) oder eine serielle Schnittstelle eingegeben werden, eine Bewegung der Maschinenachsen zu erzeugen und die Durchführung und Kontrolle des Bearbeitungsprozesses zu gewährleisten. Die Befehle werden in der Form von codierten Sprachelementen (ISO- bzw. EIA-Code) in der Steuerung in einer Datei gespeichert.

Zum näheren Verständnis der Entwicklung ist auch eine Erklärung der Datenübertragung über die serielle Schnittstelle notwendig. Die, in fast allen Werkzeugmaschinensteuerungen enthaltene serielle Schnittstelle auch RS 232 oder V24 Schnittstelle genannt ist nach folgendem durchaus als standardisiert anzusehenden Aufbau gestaltet. Die Schnittstelle verfügt zumindest über 3 Anschlußkontakte wobei der erste die Sendeleitung (auch Tx) die zweite die Empfangsleitung (auch Rx) und die dritte die Masseleitung darstellt. Zusätzlich können noch s.g. Handshake Leitungen für die Prüfung der korrekten Verbindungsabwicklung vorhanden sein (Sende- oder Empfangsbereit / nicht Sende- oder Empfangsbereit) (auch RTS/CTS und DTR/DSR). Für eine Übertragung von Daten über diese Leitung zu einem weiteren Gerät wird der Kontakt der Sendeleitung des ersten Gerätes mit dem Kontakt der Empfangsleitung des zweiten Gerätes verbunden, und die Sendeleitung des zweiten Gerätes mit der Empfangsleitung des ersten Gerätes. Dadurch entsteht der Effekt, das gesendete Daten des ersten Gerätes am zweiten Gerät als Empfang erscheinen.

Um Daten über diese Schnittstelle zu übertragen wird im Gerät ein Speicherbereich für den Empfang und das Senden definiert dessen Inhalte durch einen Chip Baustein überwacht werden. Werden von einem Programm oder durch eine Eingabe Zeichen in den Speicherbereich für das Senden geschrieben werden diese durch den Chip Baustein als Zeichenkette über die Sendeleitung übertragen und vom empfangenden Gerät in dessen Empfangsspeicher geschrieben. Die Speicherbereiche für das Senden und das Empfangen sind begrenzt und werden bei der Kommunikation immer von einer definierten Anfangs- bis zu einer Endadresse aufgefüllt oder geleert. Findet die Entleerung des Empfangsspeicherbereichs durch das empfangende Gerät nicht statt wird entweder ein entsprechendes Signal auf einer Handshake Leitung (" nicht empfangsbereit ") zum sendenden Gerät geschickt oder der Speicherbereich wird wieder von neuem aufgefüllt, die zuvor empfangenen Daten gehen verloren.

Bei der Datenausgabe von der CNC-Steuerung über eine serielle Schnittstelle wird der Inhalt einer in der Steuerung gespeicherten Datei als Zeichenkette über die Sendeleitung der Schnittstelle ausgegeben und kann mit einem, über eine Datenleitung angeschlossenen Endgerät wie z.B. einem PC mit serieller Schnittstelle und einem entsprechenden Kommunikationsprogramm (z.B. einem Terminalprogramm) empfangen werden. Da jedoch nur der Inhalt der in der Steuerung gespeicherten Datei übertragen wird, muß vor der Übertragung zu einem Endgerät eine Datei in diesem erzeugt werden in welcher dann die übertragenen Zeichen gespeichert werden können. Des weiteren muß sichergestellt sein, daß das Endgerät bereits empfangsbereit ist bevor mit der Datenübertragung aus der CNC-Steuerung begonnen wird da CNC-Steuerungen im allgemeinen den korrekten Empfang der ausgegebenen Daten nicht überprüfen.

Bei der Dateneingabe in eine CNC-Steuerung über eine serielle Schnittstelle wird nach der Auswahl der entsprechenden Funktion in der Steuerung der Inhalt einer von einem Endgerät wie z.B. einem PC mit serieller Schnittstelle gespeicherten Datei in den Datenspeicher der Steuerung eingelesen. Da jedoch auch hier nur der Inhalt der vom Endgerät gesendeten Datei übertragen wird, muß vor der Übertragung in der CNC-Steuerung entweder eine Datei erzeugt und benannt werden in welcher dann die übertragenen Zeichen gespeichert werden können. Eine weitere Variante ist, daß die CNC-Steuerung diese Datei selbst erzeugt und sie nach den Zeichen, welche sich zwischen zwei Syncronisationszeichen wie z.B. "%" und "CR/LF" befinden, benennt. Auch bei dieser Übertragung muß sichergestellt sein, daß das Endgerät unmittelbar nach der Anwahl der Einlesefunktion an der CNC-Steuerung mit dem Senden beginnt da andernfalls von der CNC-Steuerung der Übertragungsvorgang abgebrochen wird (" TIMEOUT")

Sofern die Datenübertragung von und zu einer CNC-Steuerung über ein direkt an der CNC-Steuerung befindliches Endgerät geführt wird, sind beide Varianten der Datenübertragung problemlos möglich. Ist jedoch das Endgerät von der CNC-Steuerung weiter entfernt, muß eine andere Lösung gefunden werden um die zeitlich koordinierte Empfangs- und Sendebereitschaft und die korrekte Benennung der Dateien zu gewährleisten.

Zur Beschreibung der Erfindung ist auch die Erklärung der Funktionsweise des, in den Patentansprüchen genannten Terminalservers erforderlich. Terminalserver wurden zu einer Zeit entwickelt, in der Rechner verwendet wurden die zur Daten Ein- und Ausgabe s.g. Datenterminals benützten welche aus einem Bildschirm und einer Tastatur bestanden, die über eine serielle Leitung mit der seriellen Schnittstelle des Rechners verbunden waren. Als in der Folgezeit Netzwerke entwickelt wurden, mußte eine Lösung gefunden werden um die seriell kommunizierenden Datenterminals mit dem Rechner über das Netzwerk zu verbinden. Netzwerke übertragen Daten in Form von Datenpaketen welche eine bestimmte Größe haben und welche mit der Netzwerkkennung des Absenders und des Empfängers ausgestattet sind. Zum Anschluß der Datenterminals über ein Netzwerk an einen Rechner wurden Geräte entwickelt welche die seriell vom Datenterminal gelieferten Zeichen in einem Empfangspuffer speichern und diesen Pufferinhalt entleeren und automatisch in ein Datenpaket schreiben welchem die, im Gerät programmierte, Netzwerkkennung des Absenders und des Empfängers hinzugefügt wurde. Dieses Datenpaket wird vom Gerät automatisch an den Leitrechner versandt welcher das Paket verarbeitet. Werden Datenpakete vom Leitrechner an das Datenterminal gesendet erfolgt der gleiche Vorgang in umgekehrter Reihenfolge.

Einrichtungen der eingangs definierten Art sind grundsätzlich bekannt. Sie lösen das oben definierte Problem der Datenübermittlung von und zu CNC-Steuerungen auf verschiedene Weise:
a) Eine Möglichkeit wie in US-A 5,850,343 beschrieben besteht im Hinzufügen eines Bediengerätes zur CNC-Steuerung wobei das Bediengerät mit einer seriellen Schnittstelle zur CNC-Steuerung, einem Zwischenspeicher, einer Eingabetastatur, einem Display zur Anzeige und einer Verbindungsleitung zum entfernten Endgerät ausgestattet ist. Auch die US5388051 A führt eine Zwischenspeicherung sowie eine Konvertierung von Bearbeitungsprogrammen an einem Gerät an der Steuerung durch.
   Die JP-A 5143148 löst diese Aufgabe ebenfalls durch die Anbringung eines speziellen Gerätes an der CNC-Steuerung welche eine Zwischenspeicherung und Formatierung der Bearbeitungsprogramme sowie die korrekte zeitliche Abwicklung der Kommunikation mit der CNC-Steuerung gewährleisten.
   Hier fungiert das zugefügte Gerät als Ein- und Ausgabeeinheit welche einerseits das zeitlich korrekt koordinierte Ein und Auslesen sowie andererseits die Dateibenennung und die Zwischenspeicherung der Bearbeitungsprogramme gewährleistet.
   Nachteilig ist hier, daß jede CNC-Steuerung mit einem entsprechenden speziellen Endgerät ausgerüstet werden muß was einerseits kostenaufwendig ist und andererseits auch die Bedienung eines zusätzlichen Geräts an der Steuerung erfordert. Sofern die Verbindungsleitung zum entfernten Endgerät als Netzwerk ausgeführt ist muß zusätzlich an jeder Steuerung ein Netzwerkanschluß geschaffen werden.
b) Eine weitere Möglichkeit wie in JP-A 4087760, JP-A 63237105 oder JP-A 61296412 beschrieben besteht darin, die serielle Schnittstelle der CNC-Steuerung über eine Datenleitung seriell direkt mit einem Computer zu verbinden und die zeitlich korrekte Abwicklung der Übertragungsvorgänge über ein Treiberprogramm am Computer zu steuern welches die serielle Schnittstelle zur CNC-Steuerung überwacht. Sofern von der CNC-Steuerungen Zeichen zum Computer gesendet werden werden diese vom Treiberprogramm in eine Datei geschrieben welche sich auch auf einem anderen mit dem Netzwerk verbundenen Rechner befinden kann. Die Benennung der Datei wird anhand des Inhalts der empfangenen Daten vorgenommen. Auch ist es möglich, anhand einer festgelegten Abfolge von eingehenden Zeichen vom empfangenden Rechner eine Datei zur seriellen Schnittstelle der CNC-Steuerung senden zu lassen.
   Nachteilig bei dieser Technik ist, daß die Länge einer seriellen Verbindungsleitung ein gewisses Maß (ca. 15mtr.) nicht übersteigen darf und so in der Nähe der angeschlossenen Steuerungen ein Computer mit einer seriellen Schnittstellenkarte installiert werden muß. Abgesehen von den hohen Kosten einer solchen Lösung muß dieser Erfassungsrechner mit einem Betriebssystem und einem Anwendungsprogramm ausgerüstet sein was Nachteile im Hinblick auf Stabilität und Wartung mit sich bringt.
c) Eine weitere Variante wie in EP-A1 0827054, der Zeitschrift Maschinenmarkt 103 (1997) Seite 40ff oder NC-Fertigung 1/97 Seite 62f beschrieben besteht darin, die seriell ausgegebenen Informationen der CNC-Steuerung mit einem Terminalserver in Netzwerk-Datenpakete umzuwandeln zu lassen und das Treiberprogramm am Leitrechner so zu konfigurieren, daß es zwar vom Ablauf her wie unter b) beschrieben funktioniert aber statt der seriellen Schnittstelle den Eingang von Netzwerk-Datenpaketen überwacht und bearbeitet. Zu sendende Bearbeitungsprogramme werden vom Leitrechnerprogramm ebenfalls als Netzwerk-Datenpakete abgesendet und vom Terminalserver in serielle Informationen zurückgewandelt.
   Nachteilig ist hierbei, daß TCP/IP Datenpakete nur durch das Leitrechnerprogramm angezeigt oder bearbeitet werden können. Das bedeutet in der Praxis, daß zur Anzeige und Bearbeitung keine Programme verwendet werden können welche Informationen einer seriellen Datenverbindung oder Schnittstelle benutzen. Bei diesem Verfahren kann aufgrund der eng verknüpften Ablauflogik zwischen Terminalserver und Leitrechnerprogramm jeweils nur ein Gerätetyp eingesetzt werden.
d) Eine weitere Möglichkeit besteht darin, gewisse CNC-Steuerungen selbst anstatt mit einer seriellen Schnittstelle zur Datenübertragung mit einer Netzwerkkarte auszustatten. Dabei werden die in der CNC-Steuerung als Dateien gespeicherten Bearbeitungsprogramme über ein in der CNC-Steuerung implementiertes Netzwerkprotokoll und das Netzwerk von und zu einem Leitrechner übertragen. Beispiele dafür sind Steuerungen wie von SIEMENS die Sinumerik 810, 840 oder 880 oder von HELLER die UNIPRO 90.
   Nachteilig ist hier, daß diese Möglichkeit nur für sehr wenige Typen von CNC-Steuerungen verfügbar ist. Des weiteren muß in jede CNC-Steuerung eine Netzwerkkarte eingebaut und ein Netzwerkzugang geschaffen werden werden was einen erheblichen kostenmäßigen Aufwand darstellt. Auch wird von jedem Hersteller einer solchen Lösung eines aus einer Vielzahl von verfügbaren Netzwerkprotokollen verwendet was schon beim Einsatz von 2 Steuerungen von verschiedenen Herstellern den Aufbau eines standardisierten Kommunikationsnetzes unmöglich macht.
e) Die bereits offenbarte Erfindung WO-A1 9525311 erlaubt zwar die Abbildung und Bedienung von, über einen Terminalserver und ein Netzwerk mit einem Leitrechner verbundenen Geräten mit serieller Schnittstelle.

Hier fehlt die Möglichkeit zur inhaltsbezogenen Behandlung von Daten, welche auf der virtuellen seriellen Schnittstelle des Leitrechners eingehen. Auch können keine Daten vom Leitrechner über die Bedienung der CNC-Steuerung abgerufen werden. Auch können bei dieser Lösung nur die seriellen Schnittstellen von Endgeräten am Leitrechner visualisiert werden welche am Produkt eines speziellen Herstellers angeschlossen sind.

Aufgabe der Erfindung ist es somit, ein Verfahren zur Datenübertragung von und zu CNC gesteuerten Maschinensteuerungen mit serieller Schnittstelle unter Verwendung einer gattungsgemäßen Netzwerk-Einrichtung zu schaffen, bei welcher die oben beschriebenen Nachteile beseitigt sind. Des weiteren sollte die Möglichkeit geschaffen werden, über das Bedienfeld der Maschinensteuerung Bearbeitungsprogramme von einem beliebigen Rechner im Netzwerk zu laden bzw. Bearbeitungsprogramme zu einem beliebigen Rechner im Netzwerk zu senden ohne Änderungen am Bedienfeld oder der Programmierung der Steuerung vornehmen zu müssen. Auch sollten keine Geräte zur Bedienung des Übertragungsvorgangs zur Steuerung zugefügt werden.

Dies wird erfindungsgemäß dadurch erreicht, daß die an der Steuerung vorhandene serielle Schnittstelle durch einen am Leitrechner installierten Gerätetreiber als eine virtuell vorhandene serielle Schnittstelle am Leitrechner angezeigt und bedient wird.

Der wesentliche Vorteil der erfindungsgemäßen Ausführung besteht darin, daß die auf verschiedenen CNC-Steuerungen physikalisch vorhandenen seriellen Schnittstellen über eine Netzwerkverbindung an einem Leitrechner abgebildet und bedient werden können, wodurch jede spezialisierte CNC-Netzwerktechnologie überflüssig wird. Das Verfahren serielle Zeichenketten in TCP-IP Datenpakete und umgekehrt umzuwandeln kann auf Terminalservern verschiedener Hersteller oder handelsüblichen Computern eingesetzt werden. Durch die erfindungsgemäße Ausführungsform entfällt einerseits der beschriebene Zwang zum Einsatz von Computern in der Nähe der Maschinen, andererseits können auch einzelne Maschinen sehr kostengünstig über Terminalserver und das Netzwerk mit dem Leitrechner verbunden werden. Da durch die erfindungsgemäße Ausführungsform ein bedienbares Abbild der seriellen Schnittstelle der CNC Steuerung am Leitrechner entsteht, können solche Maschinen auch mit direkt seriell mit dem Leitrechner verbundenen Maschinen kombiniert werden. Durch die erfindungsgemäße Ausführungsform können vom Bedienfeld der Maschine auf einfachste Weise Bearbeitungsprogramme am Leitrechner abgespeichert und vom Leitrechner angefordert werden, ohne daß dazu die Programmierung der Maschine geändert werden müßte oder Bediengeräte installiert werden müßten. Durch das bedienbare Abbild der seriellen Schnittstelle der Steuerung am Leitrechner wird auch die Geschlossenheit der Lösung vermieden, wodurch bei Bedarf die Daten der CNC-Steuerung durch verschiedenste Programme, welche serielle Informationen verarbeiten können analysiert und weiterverarbeitet werden können.

Eine bevorzugte Ausführungsform sieht vor, daß die nach der Ausgabe an der seriellen Schnittstelle der CNC-Steuerung im Empfangspuffer der virtuellen seriellen Schnittstelle am Leitrechner eintreffenden Zeichen von einem Steuerprogramm gelesen werden, welches eine Datei erzeugt, in welche die eintreffenden Zeichen geschrieben werden und welche nach den auf einen Synchronisationsausdruck folgenden Zeichen benannt und am Leitrechner oder einem weiteren Rechner im Netzwerk abgespeichert wird.

Eine weitere besonders günstige Ausführungsform sieht vor, daß beim Eintreffen der festgelegten Folge von Zeichen an der virtuellen seriellen Schnittstelle am Leitrechner der Inhalt einer Datei, deren Name einer festgelegten Zeichenfolge folgendem Zeichen entspricht, in den Ausgangspuffer der virtuellen Schnittstelle am Leitrechner geschrieben und über den Terminalserver oder Computer an die serielle Schnittstelle der CNC-Steuerung gesendet wird.

Somit ist vorgesehen, daß die serielle Schnittstelle der CNC-Steuerung mit einem Terminalserver oder Computer verbunden wird, welcher serielle Zeichenketten in Netzwerk-Datenpakete konvertiert, die von einem Gerätetreiber am Leitrechner in Zeichenketten zurückgewandelt und in den Eingangspuffer einer virtuellen Schnittstelle geschrieben werden. Die Konvertierung ist auch in umgekehrter Richtung möglich, ein Kommunikationsprogramm überwacht diese serielle Schnittstelle und schreibt die ankommenden Zeichenketten je nach Inhalt in eine Datei oder sendet den Inhalt einer fremden Datei in den Sendepuffer der virtuellen Schnittstelle, wodurch die Daten an die serielle Schnittstelle der CNC-Steuerung gesendet werden.

Weitere Merkmale und Einzelheiten der vorliegenden Erfindung ergeben sich aus der nachfolgenden Figurenbeschreibung. Dabei zeigt:
Fig. 1 eine Übersicht und die Anordnung der Komponenten und
Fig. 2 den Ablauf der Informationsübertragung.

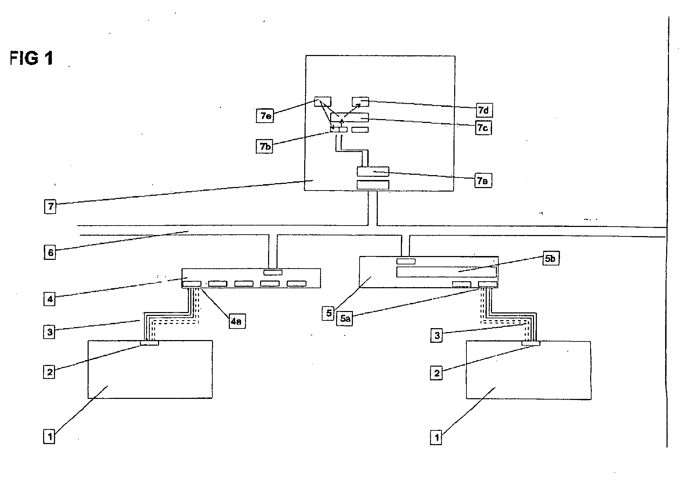

Wie in Fig. 1 gezeigt, wird die serielle Schnittstelle (2) der CNC-Steuerung (1) mit einer seriellen Datenleitung (3) über einen Terminalserver (4) oder einen Computer (5) und ein Netzwerk (6) mit TCP/IP Protokoll mit einem Leitrechner (7) verbunden.

An einen Terminalserver üblicher Bauart können im Umkreis von 15 Metern bis zu 64 CNC Steuerungen angeschlossen werden.

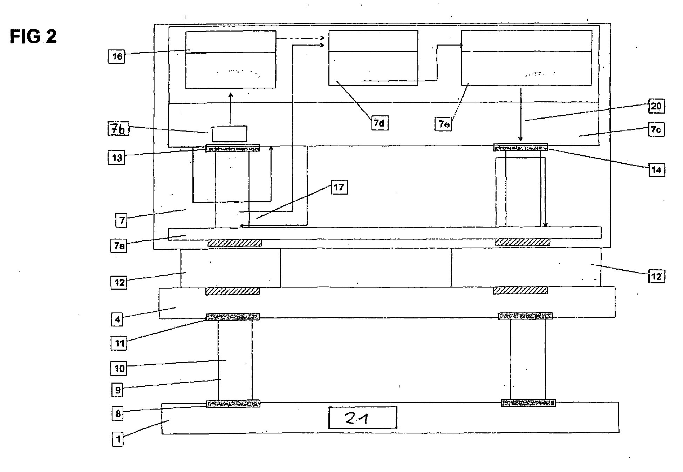

Der Ablauf der Informationsübertragung wird anhand eines Ausführungsbeispiels in Fig. 2 wie folgt erläutert:

Der Inhalts des Bearbeitungsprogramms wird durch das Kopieren in den Sendepuffer (8) der CNC-Steuerung (1) auf der Sendeleitung (9) an der seriellen Schnittstelle (2) von der CNC-Steuerung (1) als Zeichenkette (10) ausgegeben. Durch das Eintreffen von Daten im Empfangspuffer (11) des Terminalservers werden durch den Terminalserver Datenpakete (12) mit dem Inhalt des Eingangspuffers erzeugt welchen die IP Adresse des Absenders (Terminalserver), die Nummer der seriellen Schnittstelle des Terminalservers und die IP Adresse des Empfängers (Leitrechner (7)) beigefügt ist. Dieses Datenpaket wird zu dem Rechner gesandt welcher die IP-Adresse des Empfängers besitzt.

Wird anstatt des Terminalservers (4) ein Computer (5) verwendet wird auf diesem ein Gerätetreiberprogramm (5b) installiert welches den Eingangsspeicherbereich der seriellen Schnittstelle des Computers überwacht und die entnommenen Daten in ein Netzwerk-Datenpaket (12) umwandelt und dieses zum Leitrechner (7) schickt. Beim Eingang eines Netzwerk - Datenpaketes am Leitrechner (7) wird dieses durch den Gerätetreiber (7a) des Leitrechners wiederum entpackt und in den Empfangsspeicherbereich (13) der virtuellen seriellen Schnittstelle (7b) geschrieben. Da die Datenpakete des Leitrechners auch für andere Anwendungen bestimmt sein können wird im Gerätetreiberprogramm zusätzlich ein sogenannter Port des TCP/IP Netzwerkprotokolls angegeben. Das Gerätetreiberprogramm reagiert dann nur auf Datenpakete welche an diese Portnummer gesendet wurden bzw. sendet Netzwerkdatenpakete mit der Angabe der reservierten Portnummer.

Die, am Leitrechner (7) eintreffenden Datenpakete (12) werden nun nicht analysiert sondern durch das Gerätetreiberprogramm (7a) lediglich entpackt und als Zeichenkette in den Empfangspuffer (13) einer zuvor definierten virtuellen seriellen Schnittstelle (7b) des Leitrechners geschrieben. Im Gerätetreiberprogramm kann zusätzlich ein Port angegeben werden, auf welchen das Programm ausschließlich reagiert. Zur Definition der seriellen Schnittstelle wird am Leitrechner (7) ein reservierter Eingangs und Ausgangsspeicherbereich angelegt und diesem Speicherbereichen im Betriebssystem des Leitrechners (7) ein Gerät, die serielle Schnittstelle, zugeordnet.

Das Gerätetreiberprogramm (7a) ist ebenfalls in der Lage Zeichenketten (10) welche in den seriellen Ausgangspuffer (14) der gleichen Schnittstelle (7b) geschrieben werden in Datenpakete (12) mit der IP Adresse des Absenders (Leitrechner), der Nummer der seriellen Schnittstelle des Terminalservers und der IP-Adresse des Empfängers (Terminalserver) umzuwandeln. Beim Eintreffen des Datenpakets am Terminalserver wandelt dieser das Datenpaket wiederum in eine serielle Zeichenkette (10) um und sendet dieses über die im Datenpaket angegebene serielle Schnittstelle zur CNC-Steuerung (1).

Um das korrekte Ablegen und das Anfordern von Bearbeitungsprogrammen über das Bedienfeld (21) der, mit dem Netzwerk verbundenen CNC-Steuerungen zu ermöglichen wurde für den Leitrechner ein Kommunikationsprogramm (7c) entwickelt welche die Empfangspuffer (13) der virtuell definierten seriellen Schnittstellen (7b) überwacht und, sofern Daten im Empfangspuffer (13) eintreffen folgende Funktionen ausführt :
1. Das Kommunikationsprogramm (7c) liest die im Eingangspuffer der virtuellen seriellen Schnittstelle eingehenden Zeichen aus und schreibt sie in eine temporäre Datei (16), wobei sich diese Datei auch auf einem anderen Rechner im Netzwerk befinden kann.
2. Parallel zum Schreiben der Zeichenkette in die temporäre Datei werden die einzelnen Zeichen geprüft (17) und beim Empfang eines in einer Einstelldatei festgelegten Synchronisationszeichens (z.B. "%" ) werden die nachfolgenden Zeichen bis zu einem weiteren festgelegten Synchronisationszeichen (z.B. "CR/LF") zur Speicherung der temporären Empfangsdatei als eine benannte Datei (7d) nach dem kompletten Empfang der Daten verwendet.
3. Um Bearbeitungsprogramme vom Leitrechner (7) in die CNC-Steuerung (1) zu laden, wird an der CNC-Steuerung ein Bearbeitungsprogramm mit einem festgelegten Namen erstellt (z.B. %999) welches ausschließlich zur Anforderung von Programmen vom Leitrechner dient. Dieses Bearbeitungsprogramm enthält den Dateinamen des Programms, welches vom Leitrechner in die CNC-Steuerung gesendet werden sollte.
4. Beim Empfang dieser Zeichenfolge (z.B. %999) durch den Leitrechner wird vom Kommunikationsprogramm erkannt, daß nun ein Bearbeitungsprogramm zur Steuerung gesendet werden sollte. Der Dateiname des zu sendenden Bearbeitungsprogramms wird analog zu Punkt 2 gebildet, nur daß hier ein anderes Synchronisationszeichen (z.B. "S") verwendet wird. Das Kommunikationsprogramm sucht nach dieser Datei (7e) und kopiert (20) den Inhalt dieser Datei in den Sendespeicher der virtuellen seriellen Schnittstelle, welcher so bis in den Empfangsspeicher der angeschlossenen Steuerung (1) gesendet wird.

## Patentansprüche

1. Verfahren zur Datenübertragung von CNC gesteuerten Maschinensteuerungen mit serieller Schnittstelle über einen Umsetzer von RS 232 auf ein Standardnetzwerk mit TCP/IP Protokoll
- insbesondere Terminalserver (4) oder Computer (5) mit Netzwerkanschluss - zu einem, mit dem Standardnetzwerk (6) verbundenen Leitrechner (7) **dadurch gekennzeichnet,**
- **dass** durch das Eintreffen von Daten im Empfangspuffer (11) des Umsetzers durch den Umsetzer mindestens ein Datenpaket (12) mit dem Inhalt des Eingangspuffers erzeugt wird welchem die IP Adresse des Umsetzers (4,5), die Nummer der seriellen Schnittstelle des Umsetzers und die IP Adresse des Leitrechners (7) beigefügt ist,
- **dass** dieses Datenpaket zu dem Leitrechner gesandt wird welcher die IP Adresse des Leitrechners besitzt und
- **dass** am Leitrechner (7) eintreffende Datenpakete (12) durch ein Gerätetreiberprogramm (7a) entpackt und als Zeichenkette in den Empfangspuffer (13) einer zuvor definierten virtuellen seriellen Schnittstelle (7b) des Leitrechners geschrieben werden.

2. Verfahren zur Datenübertragung von einem, mit einem Standardnetzwerk (6) verbundenen Leitrechner (7) über einen Umsetzer von einem Standardnetzwerk mit TCP/IP Protokoll auf RS 232 - insbesondere Terminalserver (4) oder Computer (5) mit Netzwerkanschluss - zu CNC gesteuerten Maschinensteuerungen mit serieller Schnittstelle **dadurch gekennzeichnet,**
- **dass** am Leitrechner (7) durch ein Gerätetreiberprogramm (7a) Zeichenketten (10) welche in den seriellen Ausgangspuffer (14) einer zuvor definierten virtuellen seriellen Schnittstelle (7b) geschrieben werden in Datenpaket (12) mit der IP Adresse des Leitrechners (7), der Nummer der seriellen Schnittstelle des Umsetzers und der IP Adresse des Umsetzers (4,5) umgewandelt werden und
- **dass** beim Eintreffen des Datenpakets (12) am Umsetzer dieser das Datenpaket wiederum in eine serielle Zeichenkette (10) umwandelt und diese über die im Datenpaket angegebene serielle Schnittstelle sendet.

3. Verfahren nach Anspruch 1, **dadurch gekennzeichnet, dass** die im Empfangspuffer (13) der virtuellen seriellen Schnittstelle (7b) am Leitrechner (7) eingehenden Zeichen von einem Kommunikationsprogramm (7c) ausgelesen werden und in eine temporäre Datei (16) geschrieben werden wobei sich diese Datei auch auf einem anderen Rechner im Netzwerk befinden kann.

4. Verfahren nach Anspruch 1, **dadurch gekennzeichnet, dass** die im Empfangspuffer (13) der virtuellen seriellen Schnittstelle (7b) am Leitrechner (7) eintreffenden Zeichen von einem Kommunikationsprogramm (7c) gelesen werden, welches eine Datei (7d) erzeugt, in welche die eintreffenden Zeichen geschrieben werden und welche nach den auf einen Synchronisationsausdruck folgenden Zeichen benannt und am Leitrechner (7) oder einem weiteren Rechner im Netzwerk abgespeichert wird.

5. Verfahren nach Anspruch 1, **dadurch gekennzeichnet, dass** beim Eintreffen der festgelegten Folge von Zeichen an der virtuellen seriellen Schnittstelle (7b) am Leitrechner (7) der Inhalt einer Datei (7e) deren Name einer festgelegten Zeichenfolge folgenden Zeichen entspricht, in den Ausgangspuffer der virtuellen Schnittstelle (7b) am Leitrechner geschrieben wird.

6. Verfahren nach Anspruch 1 oder 2, **dadurch gekennzeichnet, dass** im Gerätetreiberprogramm (7a) am Leitrechner (7) ein sogenannter Port des TCP/IP Netzwerkprotokolls angegeben wird wodurch das Gerätetreiberprogramm (7a) nur auf Datenpakete (12) reagiert welche an diese Portnummer gesendet wurden und Datenpakete mit der Angabe der reservierten Portnummer sendet.

## Claims

1. Method for the transmission of data from CNC controlled machines with serial ports using a converter from RS232 to a standard network with TCP/IP protocol - especially terminal servers (4) or computers (5) with network connections - to a master computer (7) which is connected to a standard network (6) **characterized in that**
- the arrival of data in the input buffer (11) of the converter causes the converter to create at least one data packet (11) with the content of the input buffer and annexed IP address of the converter (4,5), serial port number of the converter and IP address of the master computer (7),
- this data packet is sent to the master computer having the IP address of the master computer and
- data packets (12) arriving at the master computer (7) are unpacked by a device driver program (7a) to a character string and written into the reception buffer (13) of a previously defined virtual serial port (7b) of the master computer.

2. Method for the transmission of data from a master computer (7) which is connected to a standard network (6) to CNC controlled machine controls with serial port using a converter from a standard network with TCP/IP protocol to RS232 - especially terminal servers (4) or computers (5) with network connections - **characterized in that**
- character strings (10) which are written into the serial transmit buffer (14) of a previously defined virtual serial port (7b) are converted by a device driver program (7a) at the master computer (7) into data packets (12) having the IP address of the master computer (7), the serial port number of the converter and the IP address of the converter (4,5)and
- the arrival of the data packet (12) at the converter causes the converter to transform it to a character string (10) and send it out by the serial interface as specified in the data packet.

3. Method according to Claim 1 **characterized in that** the characters arriving at the reception buffer (13) of the virtual serial device (7b) of the master computer (7) are readout by a communication program (7c) and written into a temporary file (16) whereas this file can also be located on another computer in the network.

4. Method according to Claim 1 **characterized in that** the characters arriving at the reception buffer (13) of the virtual serial device (7b) of the master computer (7) are read by a communication program (7c) which generates a file (7d) in which the arriving characters are written and which is named by characters that follow to a synchronization expression and which is stored at the master computer (7) or another computer in the network.

5. Method according to Claim 1 **characterized in that** at the arrival of a predefined sequence of characters at the virtual serial device at the master computer (7) the contents of a file whose name matches the characters that follow a predefined synchronization character is written into the sending buffer of the virtual serial device (7b) at the master computer (7).

6. Method according to Claim 1 or 2 **characterized in that** in the device driver program (7a) at the master computer (7) a so called port of the TCP/IP network protocol can be assigned by which the device driver only reacts to data packets that are sent to this port number and sends out data packets with the specification of this reserved port number.

## Revendications

1. Procédé de transmission de données d'une machine à commande numérique avec interface série à un ordinateur hôte muni d'une connexion réseau standard (6) par l'intermédiaire d'un convertisseur RS 232 vers un réseau standard au protocole TCP/IP (en particulier serveur de terminal (4) ou ordinateur (5) avec connexion réseau), **caractérisé en ce que**
- l'arrivée de données dans la mémoire tampon réceptrice (11) du convertisseur entraîne la création par le convertisseur d'au moins un paquet de données (12) avec le contenu de la mémoire tampon réceptrice auquel sont joints l'adresse IP du convertisseur (4,5), le numéro de l'interface série du convertisseur et l'adresse IP de l'ordinateur hôte (7)
- ce paquet de données est transmis à l'ordinateur hôte auquel est attribué l'adresse IP de l'ordinateur hôte et
- les paquets de données (12) arrivant à l'ordinateur hôte (7) sont décompressés par un programme pilote (7a) en une suite de caractères et notés dans la mémoire tampon réceptrice (13) d'une interface série virtuelle (7b) prédéterminée.

2. Procédé de transmission de données d'un ordinateur hôte (7) muni d'une connexion réseau standard (6) à l'armoire de commande d'une machine à commande numérique avec interface série par l'intermédiaire d'un convertisseur réseau TCP/IP vers RS 232 (en particulier serveur de terminal (4) ou ordinateur (5) avec connexion réseau), **caractérisé en ce que**
- des suites de caractères (10) notées dans la mémoire tampon émettrice série (14) d'une interface série virtuelle prédéterminée (7b) sont converties par un programme pilote (7a) sur un ordinateur hôte (7) en paquets de données (12) contenant l'adresse IP de l'ordinateur hôte (7), le numéro de l'interface série du convertisseur et l'adresse IP du convertisseur (4,5), et
- l'arrivée des paquets de données (12) au convertisseur entraîne la conversion par le convertisseur de ces paquets de données en une suite de caractères (10) et la transmission de celle-ci par l'interface série prédéterminée dans le paquet de données.

3. Procédé selon la Revendication 1 **caractérisé en ce que** les caractères arrivant à la mémoire tampon réceptrice (13) de l'interface série virtuelle (7b) de l'ordinateur hôte (7) sont lus par un programme de communication (7c) et notés dans un fichier temporaire (16), ce fichier temporaire pouvant aussi se trouver sur un autre ordinateur du réseau.

4. Procédé selon la Revendication 1 **caractérisé en ce que** les caractères arrivant à la mémoire tampon réceptrice (13) de l'interface série virtuelle (7b) de l'ordinateur hôte (7) sont lus par un programme de communication (7c) qui crée un fichier (7d) où sont notés les caractères entrants et dont le nom est composé de caractères conformes à une expression de synchronisation, fichier qui est mémorisé sur l'ordinateur hôte (7) ou sur un autre ordinateur du réseau.

5. Procédé selon la Revendication 1 **caractérisé en ce qu'**à l'arrivée d'une suite de caractères prédéfinie à l'interface série virtuelle (7b) de l'ordinateur hôte (7), le contenu d'un fichier (7e) dont le nom est composé de caractères conformes à une suite de caractères prédéfinie est noté dans la mémoire tampon émettrice de l'interface série virtuelle (7b) de l'ordinateur hôte (7).

6. Procédé selon la Revendication 1 ou 2 **caractérisé en ce que**, dans le programme pilote (7a) de l'ordinateur hôte (7), est attribué ce que l'on appelle un « port du protocole réseau TCP/IP », le programme pilote (7a) ne réagit ainsi qu'aux paquets de données (12) envoyés à ce numéro de port et envoie des paquets de données avec l'indication de ce numéro de port réservé.
